# EUROPEAN PATENT SPECIFICATION

(11) **EP 4 031 813 B1**
(45) Date of publication and mention of the grant of the patent: **19.03.2025**
(21) Application number: 20767886.3
(22) Date of filing: 01.09.2020
(51) Int. Cl.: F24D 17/00, F28D 21/00, E03C 1/04, E03C 1/00

(54) **SYSTEM FOR HEAT RECOVERY FROM SHOWER DRAIN WATER AND KIT OF PARTS FOR SUCH A SYSTEM**
SYSTEM ZUR WÄRMERÜCKGEWINNUNG AUS DUSCHABFLUSSWASSER UND TEILESATZ FÜR EIN SOLCHES SYSTEM
SYSTÈME DE RÉCUPÉRATION DE CHALEUR DE L'EAU D'ÉCOULEMENT DE DOUCHE ET KIT DE PIÈCES POUR UN TEL SYSTÈME

(30) Priority: 18.09.2019 NL 2023849
(43) Date of publication of application: 27.07.2022
(73) Proprietor: Sanura B.V., 3542 AA Utrecht (NL); Bergmans, Bart Joseph Christiaan, 3604 DB Maarssen (NL); Schietecat, Tomas Johan, 3604 DB Maarssen (NL)
(72) Inventor: BERGMANS, Bart Joseph Christiaan, 3604 DB Maarssen (NL); SCHIETECAT, Tomas Johan, 3604 DB Maarssen (NL)
(74) Representative: Patent Business B.V.
(86) International application number: PCT/NL2020/050538
(87) International publication number: WO 2021/054821

(56) References cited:
- WO-A1-2010/084620
- CN-A- 101 943 278
- CN-A- 102 997 717
- CN-A- 107 387 808
- DE-A1- 3 633 321
- GB-A- 2 416 829
- US-B2- 7 849 530

## Description

### FIELD OF THE INVENTION

The present invention is in the field of a heat exchange system for recovery of heat from shower drain water, and its use, for part of the energy spent in the preparation of hot water, which energy is normally lost when the water is drained into the sewage. This heat recovery device may be applied to the recovery of energy from hot sanitary water, such as the bath water or kitchen water, either from domestic or industrial use.

### BACKGROUND OF THE INVENTION

Such is a system is known from WO 2017/077462 A1. Also EP3372939 A2 recites a heat exchanger for heating fresh water using heat from wastewater in a shower or bathtub. The heat exchanger has a drain pan, a heat exchanger unit which is arranged in the drain pan, and a distributing element for distributing draining wastewater over the heat exchanger unit. The heat exchanger unit has multiple tube portions which follow one another sequentially and are connected to one another by diverting portions. Each two horizontally running tube portions which follow one another and which are thus connected by a deflecting portion are arranged one over the other, and wastewater which is dripping or flowing down is sprinkled on or flows over the tube portions one after the other.

CN102996958 B recites an in-series device for a diversion pipeline. The in-series device comprises a body and transition joints, wherein a main liquid inlet, a main liquid outlet, a diversion liquid inlet and a diversion liquid outlet are arranged on the body, the main liquid inlet and the main liquid outlet are not communicated with each other, the main liquid inlet or the main liquid outlet is respectively communicated with the diversion liquid outlet or the diversion liquid inlet, and any one ends of the main liquid inlet and the main liquid outlet are respectively provided with an eccentric transition joint. According to the in-series device, a main liquid inlet channel enters into a branch loop in a diversion way and then returns into a main liquid outlet channel in an in-series way, so that the structure of the diversion pipeline can be optimized. The in-series device is particularly suitable for a shower system with a function of recycling waste heat of water after shower, and each eccentric transition joint is adaptive to and compensates the deviation of an outlet of a main pipeline. Cold water enters into a heat exchanger in a diversion way and then returns into a shower cold water pipeline to enter into a water collecting pipe after recycling the heat of the water after shower, so that the defect of structural complexity of a diversion pipeline in the prior art can be overcome. The in-series device is simple in structure, simple and convenient to install, ordered, attractive in appearance and safe in use.

US2011289674 A1 recites a heat exchanger for a shower tray can be arranged in the bottom of the shower tray for the heat recovery from wastewater so as to heat fresh water. To this end, the heat exchanger has a planar cover plate as the drain surface over which the wastewater drains. The cover plate forms the bottom of the shower tray, over which a lid that can be removed without the use of tools is arranged as a tread plate. The heat exchanger preferably includes a distributor element, which is arranged for distributing the wastewater over the drain surface. The distributor element is preferably a retaining element, which retains the wastewater at an upper edge of the drain surface and forms an overflow along the upper edge.

CN 102 997 717 B recites a water stop type shower device for effectively recycling heat energy of hot water after shower. The water stop type shower device comprises a shower device and a waste heat recycling device, wherein the waste heat recycling device comprises a heat exchange groove and a heat exchange device, the heat exchange device is arranged in the heat exchange groove, the heat exchange device is respectively connected with a heat exchange water outlet pipe and a heat exchange water inlet pipe through a heat exchange pipe collecting base, the heat exchange water outlet pipe and the heat exchange water inlet pipe are respectively communicated with a branch liquid inlet pipe and a branch liquid outlet pipe of a diversion in-series device, and the diversion in-series device is connected with the shower device.

CN 101 943 278 A recites a valve component which comprises a shell, a valve core arranged in the shell and a handle for controlling the valve core, wherein the valve core comprises a valve core body with a cavity inside and an opening at one end, a bottom cover hermetically buckled at the open end of the valve core body, a fixed piece fixedly arranged on the bottom cover in the cavity inside the valve core body, a sliding piece which can be arranged on the fixed piece in a relatively sliding way and a control rod which is arranged at an end part opposite to the opening of the valve core body on the valve core body and capable of rotating in a pitching way with respect to the valve core body, and a heat energy recovery device comprising the valve component and a heat exchanger.

Typically the above disclosures relate to systems that are not efficient enough in terms of heat recovery, somewhat difficult to install, the construction being too high, and too expensive.

The present invention therefore relates to an improved heat exchange system for a shower, which solves one or more of the above problems and drawbacks of the prior art, providing reliable results, without jeopardizing functionality and advantages.

### SUMMARY OF THE INVENTION

It is an object of the invention to overcome one or more limitations of the devices of the prior art and at the very least to provide an alternative thereto.

In a first aspect the present invention relates to a heat exchange system for a shower comprising a tray 1 comprising a heat exchanger 18 for exchanging heat from warm shower water to cold inflow water, typically a fluid flow path, such as a meandering fluid flow path, the heat exchanger comprising an inlet 24 and an outlet 25, wherein the heat exchanger is substantially in a direction perpendicular to warm shower water provided through the tray, a double channel 2 for fluid flow, wherein a first channel is adapted to be in fluid connection with a cold water outlet and the heat exchanger inlet 24 and a second channel is adapted to be in fluid connection with the heat exchanger outlet 25 and a shower faucet, and a fluid diverter 3, the diverter comprising a first fluid flow path 6 for receiving cold water from the cold water outlet and transferring cold water to the heat exchanger inlet 24 and a second fluid flow path 7 for receiving warm water from the heat exchanger outlet 25 and transferring said warm water to the shower faucet, and a fixator 10 for fixing to a cold water outlet. Therewith an efficient heat exchange, easy to install, versatile, and cost-effective system is provided. The present invention provides a solution to one or more of the above-mentioned problems and overcomes drawbacks of the prior art. The present heat exchange system may be partly or fully removably attachable, or may be partly or fully integrated, such as in a wall or floor. In addition, the present system is relatively flat, that is thin. A typical height of the tray for instance is less than 10 cm, such as only 4-8 cm.

In a second aspect the present invention relates to a kit of parts comprising at least one element selected from the present heat exchange system, and a shower faucet, a coupler, a shower wall fitting, a diverter, and a fitting.

Advantages of the present description are detailed throughout the description.

### DETAILED DESCRIPTION OF THE INVENTION

In an exemplary embodiment the present heat exchange system may comprise a shower faucet.

In an exemplary embodiment of the present heat exchange system the fluid diverter may be integrated in the shower faucet 13. The system is easier to install, consumes less space, and is considered more aesthetic.

In an exemplary embodiment of the present heat exchange system the fluid diverter 3 may comprise a first fluid flow path inlet 8 which is in line with a second fluid flow path outlet 9. Therewith a distance between cold and hot water supply remains substantially equal.

In an exemplary embodiment of the present heat exchange system the first fluid flow path 6 of the fluid diverter may be directed to a first side of the diverter and wherein the second fluid flow path 7 of the diverter may be directed to a second side of the diverter. Therewith the diverter can be mounted as close as possible to a wall.

In an exemplary embodiment of the present heat exchange system the fixator 10 of the diverter may be a screw-type fitting, and wherein the fixator is rotatable over 360 degrees. The present system is therewith easier to install.

In an exemplary embodiment of the present heat exchange system the first and second fluid flow paths 6,7 may be adjacent to one and another, and wherein the first fluid flow path comprises an inlet 8, a sideways channel in fluid connection with the inlet, and a vertical outlet 11 in fluid connection with the sideways channel, and wherein the second fluid flow path comprises a vertical inlet 12, a sideways channel in fluid connection with the inlet, and an outlet 9 in fluid connection with the sideways channel, preferably wherein sideways channels are located under an angle α, such as of 30-89 degrees with respect to the inlet/outlet 8,9, preferably 80-88 degrees, such as 85-87 degrees. Rather unexpected almost straight angles could be used. This has the advantage that the diverter can be mounted as close as possible to a wall.

In an exemplary embodiment of the present heat exchange system the tray 1 may comprise an inlet 28 for receiving warm shower water, and an outlet 29 for draining shower water.

In an exemplary embodiment of the present heat exchange system the inlet and outlet 24,25 of the heat exchanger 18 may be diagonally placed. Therewith the tray can be installed in various positions (rotated with respect to one and another).

In an exemplary embodiment of the present heat exchange system the tray 1 may comprise a top plate 19, a heat exchanger 18, and a bottom plate 17, preferably a demountable top plate, bottom plate, and heat exchanger. Parts can be replaced easier, the system is easy to clean, and can be produced cheap.

In an exemplary embodiment of the present heat exchange system the heat exchanger 18 preferably may be provided over 5-50% of a surface area of the bottom plate 17. An efficiency is optimal with a minimum of material used.

In an exemplary embodiment of the present heat exchange system the heat exchanger 18 may be substantially in a direction perpendicular to warm shower water provided through the tray 1.

A good heat transfer efficiency is obtained with low construction costs and a flat construction height.

In an exemplary embodiment of the present heat exchange system a warm water fluid flow path 21 preferably may be provided in a 0.01-4 cm thick horizontal duct, such as a 0.1-1 cm thick horizontal duct, preferably a variable thick horizontal duct. A good efficiency is obtained with a small construction height.

In an exemplary embodiment of the present heat exchange system the tray 1 may comprise a gutter 20 for receiving the double channel 2, where at least one gutter entrance 27 is located in a corner of the tray where no inlet or outlet 24,25 for the heat exchanger is provided. Therewith the tray can be installed in various positions (rotated with respect to one and another) and is considered more aesthetic.

In an exemplary embodiment of the present heat exchange system the tray 1 comprises supports 31 that provide draining. Therewith a better removal of water, and reduced smell is obtained.

In an exemplary embodiment of the present heat exchange system the tray 1 may comprise fasteners 23 for fixing the heat exchanger 18 to the bottom plate 17, wherein the top plate 19 preferably comprises positioners 33 for forcing the heat exchanger downwards. Therewith improved heat exchange is obtained.

In an exemplary embodiment of the present heat exchange system the bottom plate 17 may comprise bottom plate material 22 in between the heat exchanger 18 over 50-90% of the surface area thereof, wherein a height of said bottom plate material may be variable and is <100%, preferably <80%, of a height of the heat exchanger adjacent to said heat exchanger or absent where said heat exchanger is provided, preferably isolating bottom plate material. An optimum efficiency is therewith obtained.

In an exemplary embodiment of the present heat exchange system the tray supports 31 may provide draining towards the tray outlet 29, and wherein the positioners 33 provide draining towards the tray inlet 28. The system is therewith easier to install.

In an exemplary embodiment of the present heat exchange system the double channel 2 may be at least partly provided in a casing 36. This is considered more aesthetic.

In an exemplary embodiment of the present heat exchange system the double channel 2 may comprise at least one coupler 37, preferably a coupler with a thread. The system is therewith easier to install.

The invention will hereafter be further elucidated through the following examples which are exemplary and explanatory of nature and are not intended to be considered limiting of the invention. To the person skilled in the art it may be clear that many variants, being obvious or not, may be conceivable falling within the scope of protection, defined by the present claims.

### SUMMARY OF THE FIGURES

Figures A-O show schematically details of the present device.

### DETAILED DESCRIPTION OF FIGURES

In the figures:
- 1: tray
- 2: double connection tube
- 3: connection device
- 4: fluid diverter fitting
- 5: expansion fitting
- 6: first fluid flow path
- 7: second fluid flow path
- 8: first fluid flow path inlet
- 9: second fluid flow path outlet
- 10: coupler for fixing
- 11: first fluid flow path outlet
- 12: second fluid flow path inlet
- 13: shower faucet with integrated fluid diverter
- 14: first fluid flow path outlet
- 15: second fluid flow path inlet
- 16: outlet to shower head
- 17: bottom plate
- 18: heat exchanger tube
- 19: top plate
- 20: gutter
- 21: warm water fluid flow path
- 22: bottom plate material in between the meandering fluid flow path
- 23: fastener
- 24: heat exchanger inlet
- 25: heat exchanger outlet
- 26: rubber seal
- 27: gutter entrance
- 28: tray inlet
- 29: tray outlet
- 30: cavity
- 31: tray support
- 32: discharge pipe
- 33: positioner
- 34: elevated edge
- 35: slot-shaped cavity
- 36: casing
- 37: coupler

The invention relates to a system consisting of three interacting parts (see figures A,B) that work together to transfer heat from shower drain water towards the incoming cold water: a tray 1 in which the incoming cold water is preheated by recovering heat from the shower drain water, a double connection tube 2 that transports the incoming cold water from a connection device towards the tray, and the preheated water from the tray back to the connection device, and a connection device 3 that diverts the cold water towards the double connection tube and feeds the preheated water from the double connection tube back into a shower faucet where it is mixed with the incoming hot water.

The objective of the connection device 3 is to connect the double connection tube 2 to the incoming cold water and to the shower faucet without the need of any breaking works (see figure C). A common type of shower faucet has a cold water and hot water inlet that are arranged next to each other (often with a heart-to-heart distance of 12 or 15 cm) and that are intended to fit directly onto two fittings in the shower wall with a corresponding heart-to-heart distance. In the present invention the connection device 3 consists of a fluid diverter fitting 4 and an expansion fitting 5. The fluid diverter fitting is placed between the cold water wall fitting and the cold water inlet of the shower faucet (see figures D,E,F). A similar diverter fitting is described in patent application CN102996958 B, in which the first fluid flow path inlet and the second fluid flow path outlet of the fitting are eccentric to each other, whereas in the present invention the first fluid flow path inlet 8 and second fluid flow path outlet 9 of the fitting are exactly in line with each other in order to retain the specific heart-to-heart distance. The fluid diverter fitting has a 360 degree rotatable threaded coupling 10, to allow the fluid diverter fitting to be always arranged with its first fluid flow path outlet 11 and second fluid flow path inlet 12 faced downward. The fluid diverter fitting is constructed in such a way that the installation length is minimized, by diverting the fluid flow paths sideways and downward directly next to the first fluid flow path inlet and the second fluid flow path outlet. A simple expansion fitting 5, with the same length as the fluid diverter fitting, is placed on the hot water wall fitting, such that the shower faucet can be mounted directly on the fluid diverter fitting and expansion fitting. The double connection tube 2 is connected to the first fluid path outlet and the second fluid flow path inlet of the fluid diverter fitting.

Alternatively, the connection device as a whole can be integrated into an adjusted shower faucet 13, such that the double connection tube 2 can be directly connected to the first fluid flow path outlet 14 and second fluid flow path inlet 15 that are situated on the outside of the casing of the adjusted shower faucet (see figures G,H).

The purpose of the tray 1 is to transfer heat from the shower drain water to the incoming cold water (see figure I). The tray can either be placed on top of the existing shower tray or shower floor, or can act as a shower tray in itself.

The basis of the tray 1 is a bottom plate 17 that is constructed in one piece and has two main parts: a warm water fluid flow path 21, through which the shower drain water flows, and a gutter 20 that is surrounding the warm water fluid flow path and is intended to guide and contain the inlet and outlet tubes. In the warm water fluid flow path, the shower drain water flows over a meandering heat exchanger tube 18 that is made of heat-conducting material such as copper. The flow direction of the shower drain water is perpendicular to the primary direction of the heat exchanger tubes (see figures J,K). Such a principle is known from patent application EP3372939 A2 that uses heat exchanger tubes that are situated above each other. In the present invention, the heat exchanger tubes are placed in a horizontal arrangement, to be able to increase the number of heat exchanger tubes, and hence the heat transfer efficiency, while reducing the construction height of the tray. The straight segments of the meandering heat exchanger tube are situated within the warm water fluid flow path. In the spaces between consecutive straight tube segments, the bottom plate material 22 is elevated up to a height of 100% of the tube diameter, thereby shortening the time to completely submerge the heat exchanger in shower drain water. The bended segments of the meandering heat exchanger tube fit into fasteners 23 that force the heat exchanger tube in the right position. The meandering heat exchanger tube lies loosely on the bottom plate 17 , with its two ends 24,25 sticking from the warm water fluid flow path 21 into the gutter 20 of the tray. The two ends of the meandering heat exchanger tube have rubber seals 26 that are folded around the tube and prevent the shower water from flowing from the warm water fluid flow path to the gutter of the tray. The two ends of the meandering heat exchanger tube function as an inlet connector 24 and outlet connector 25 and have threaded ends to easily fit the double connection tube. The heat exchanger inlet and outlet 24,25 are situated diagonally across each other in two corners of the gutter, while the other two corners of the gutter contain recesses on the outside that function as two possible entrances 27 for the double connection tube. The tray has rounded edges (r>5cm), to allow for easy guiding and fitting of the double connection tube 2 inside the gutter. The double connection tube enters the gutter through one of the two entrances, where it is split into two separate tubes that are connected to the inlet and outlet connectors of the meandering heat exchanger tube. In this way the tray can be turned around its vertical axis in any way, while there is always one entrance close to the shower wall, so that the double connection tube 2 can always be arranged close to the shower wall in an aesthetically acceptable way (see figure L).

The downside of the bottom plate 17 contains an array of small tray supports 31 that differ in height from around 1cm to 2cm, to create a modest slope (<1,5%) in the direction of the warm water fluid flow path 21. This slope is necessary for situations in which the tray 1 cannot benefit from the slope that is already present in the shower floor, for example in showers where the floor drain is situated in the middle of the shower floor. In all other cases, the tray can be arranged on the shower floor in such a way that the direction of the warm water fluid flow path is in line with the slope of the shower floor.

In the warm water fluid flow path 21 of the tray 1, there is a tray inlet 28 in which the shower drain water is introduced, and a tray outlet 29, where the cooled-down shower drain water is discharged out of the tray through a cavity 30 . The shower drain water is discharged either onto the shower floor or into a discharge pipe 32 that is mounted to the cavity.

On top of the bottom plate 17 there is a top plate 19 that has two main functions: 1.) to form a solid feet space for a showering person, and 2.) to introduce the (warm) shower water as quickly as possible into the underlying warm water fluid flow path 21 (see figures M,N). The top plate is made of one piece and has downwardly directed positioners 33, that are arranged in the direction of the warm water fluid flow path 21 and that rest on top of the meandering heat exchanger tube 18. In this way, the weight of the person standing on top of the top plate is passed onto the heat exchanger tube and forces the heat exchanger tube towards the bottom of the bottom plate, to prevent shower drain water from flowing underneath the heat exchanger tube. The positioners are constructed in such a way that the top plate has a slope in the direction opposite to the slope of the warm water fluid flow path. The slope of the top plate neutralizes the slope of the warm water fluid flow path and the slope of the shower floor, and adds a slight slope in the opposite direction. The slope is carefully chosen (3-5%) in such a way that the tray 1 can be placed directly on top of the floor of most showers without a need for levelling. There is an elevated edge 34 around the edges of the top plate that prevent the (hot) shower water from running off the top plate onto the shower floor. The height of the elevated edge is carefully chosen (0.6 cm - 0.8 cm) to be high enough to prevent the water from running off, while being low enough to prevent foot injuries while stepping onto the top plate. In the lowest part of the top plate is a slot-shaped cavity 35 through which the hot shower water is discharged into the underlying warm water fluid flow path.

The double connection tube 2 is largely encased in a casing or wrap 36, to visually form one piece (see figure O). The encasement stops in the place where the double connection tube enters the tray 1. The double connection tube has threaded couplers 37 on all four tube ends, to easily fit the tubes onto the connection device 2 and onto the meandering heat exchanger tube 18.

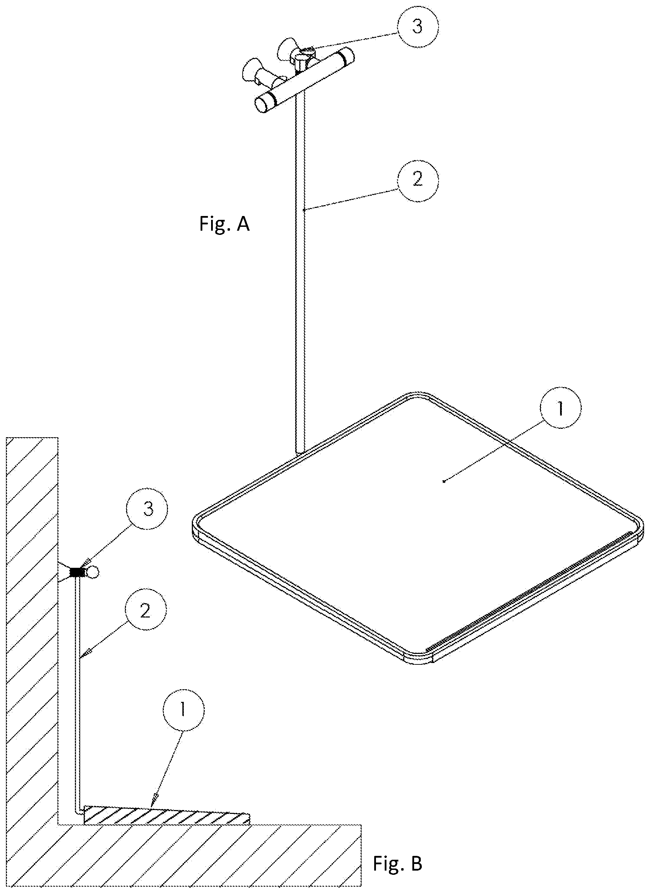

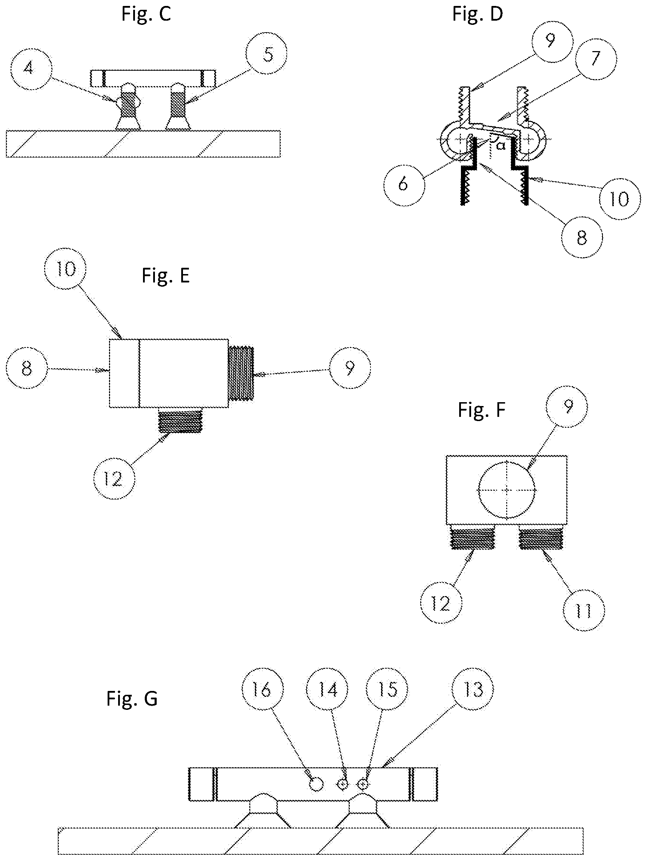

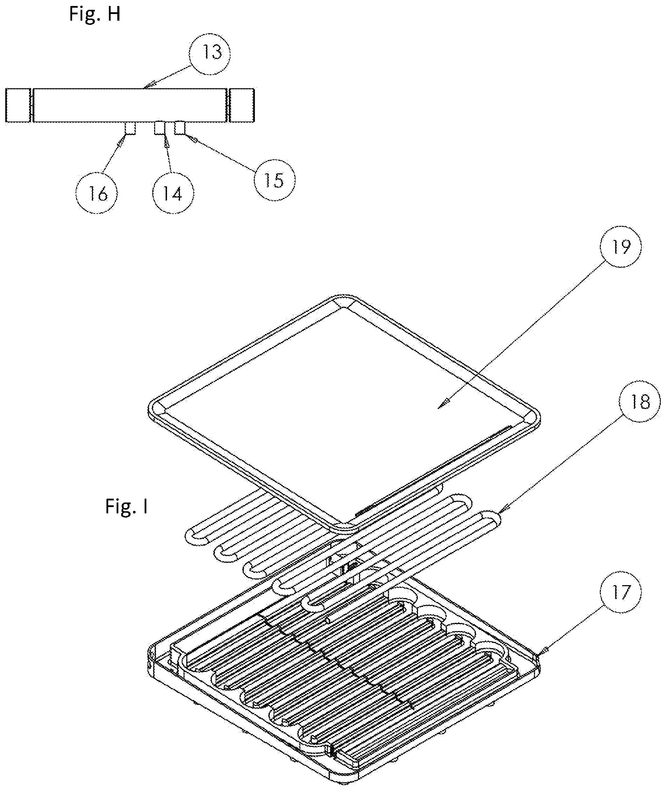

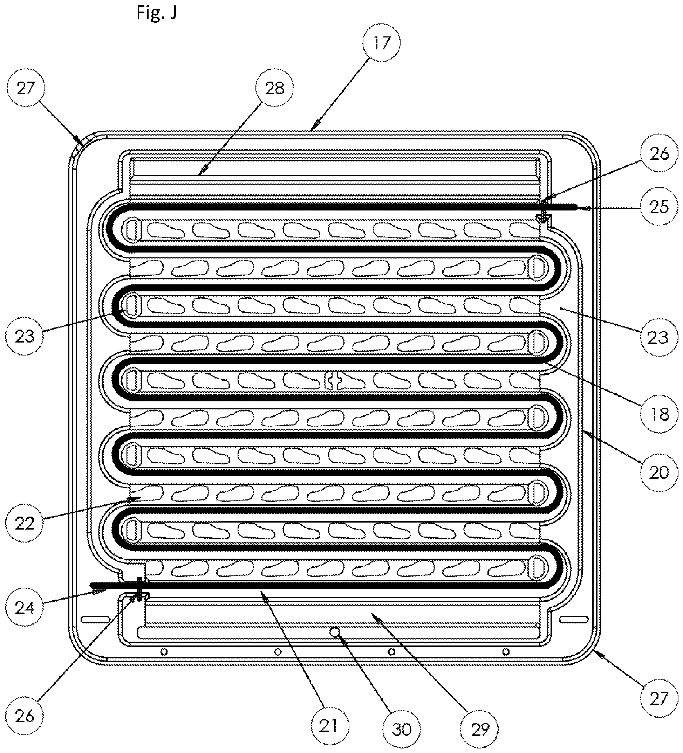

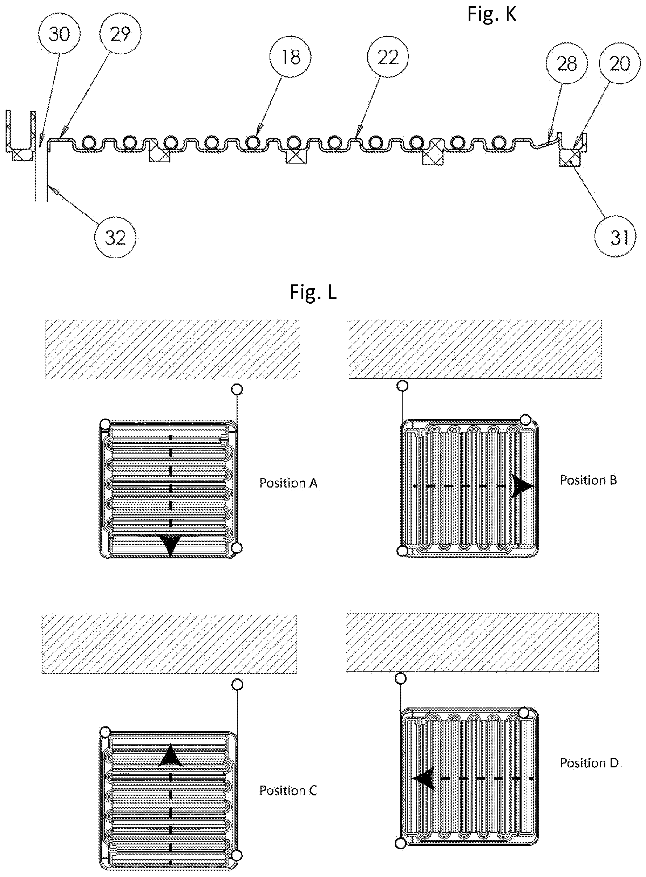

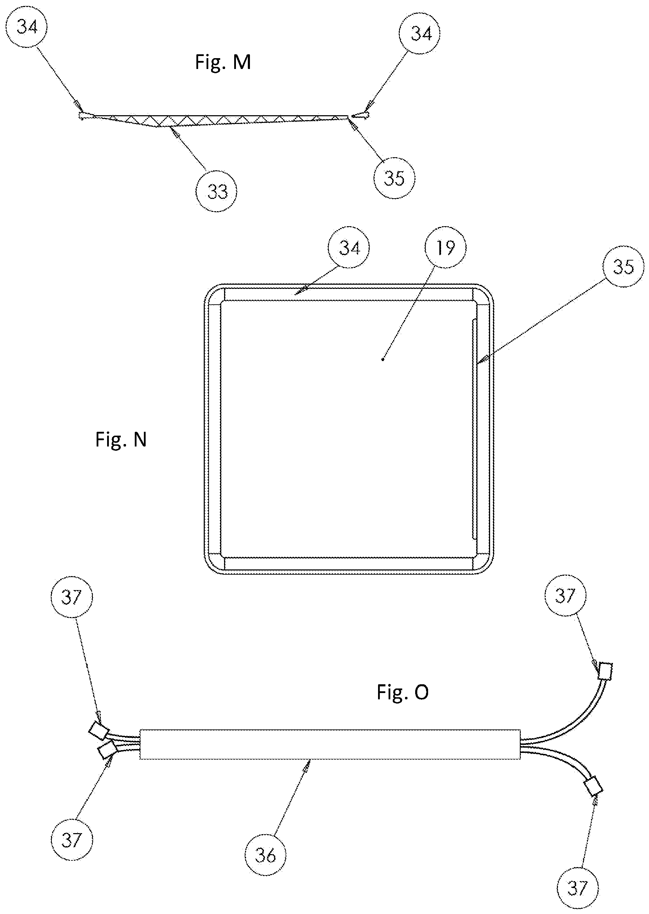

## Claims

1. Heat exchange system for a shower comprising a tray (1) comprising a heat exchanger (18) comprising an inlet (24) and an outlet (25),
a double channel (2) for fluid flow, wherein a first channel is adapted to be in fluid connection with a cold water outlet and the heat exchanger inlet(24) and a second channel is adapted to be in fluid connection with the heat exchanger outlet (25) and a shower faucet, and
a fluid diverter (3), the diverter comprising a first fluid flow path (6) for receiving cold water from the cold water outlet and transferring cold water to the heat exchanger inlet (24) and a second fluid flow path (7) for receiving warm water from the heat exchanger outlet (25) and transferring said warm water to the shower faucet, and a fixator (10) for fixing to a cold water outlet,
**characterized in that** the heat exchanger (18) comprises a meandering fluid flow path with straight tube segments for exchanging heat from warm shower water to cold inflow water, wherein the straight tube segments of the heat exchanger are substantially in a direction perpendicular to warm shower water provided through the tray, wherein a warm water flow path (21) preferably is provided in a 0,01-4 cm thick horizontal duct, preferably a variable thick horizontal duct.

2. Heat exchange system according to claim 1, comprising a shower faucet, in particular
wherein the fluid diverter is integrated in the shower faucet (13).

3. Heat exchange system according to any of claims 1-2, wherein the fluid diverter (3) comprises a first fluid flow path inlet (8) which is in line with a second fluid flow path outlet (9).

4. Heat exchange system according to any of claims 1-3, wherein the first fluid flow path (6) of the diverter is directed to a first side of the diverter and wherein the second fluid flow path (7) of the diverter is directed to a second side of the diverter.

5. Heat exchange system according to any of claims 1-4, wherein the fixator (10) of the diverter is a screw-type fitting, and wherein the fixator is rotatable over 360 degrees.

6. Heat exchange system according to any of claims 1-5, wherein the first and second fluid flow paths (6,7) are adjacent to one and another, and wherein the first fluid flow path comprises an inlet (8), a sideways channel in fluid connection with the inlet, and a vertical outlet (11) in fluid connection with the sideways channel, and wherein the second fluid flow path comprises a vertical inlet (12), a sideways channel in fluid connection with the inlet, and an outlet (9) in fluid connection with the sideways channel, preferably wherein sideways channels are located under an angle α, such as of 30-89 degrees, with respect to the inlet/outlet (8,9), in particular
wherein said first fluid flow path inlet is at least partly placed between said vertical inlet and vertical outlet.

7. Heat exchange system according to any of claims 1-6, wherein the tray (1) comprises an inlet (28) for receiving warm shower water, and an outlet (29) for draining shower water.

8. Heat exchange system according to any of claims 1-7, wherein the inlet (24) and outlet (25) of the heat exchanger (18) are diagonally placed in tray (1).

9. Heat exchange system according to any of claims 1-8, wherein the tray (1) comprises a top plate (19), a heat exchanger (18) and a bottom plate (17), preferably a demountable top plate, bottom plate, and heat exchanger, wherein the heat exchanger preferably is provided over 5-50% of a surface area of the bottom plate.

10. Heat exchange system according to any of claims 1-9, wherein the tray (1) comprises a gutter (20) for receiving the double channel (2), where at least one gutter entrance (27) is located in a corner of the tray where no inlet (24) or outlet (25) for the heat exchanger is provided.

11. Heat exchange system according to any of claims 1-10, wherein the tray (1) comprises supports (31) that provide draining.

12. Heat exchange system according to any of claims 1-11, wherein the tray (1) comprises fasteners (23) for fixing the heat exchanger (18) to the bottom plate (17), wherein the tray preferably comprises positioners (33) for forcing the heat exchanger downwards, and wherein the bottom plate comprises bottom plate material (22) in between the heat exchanger over 50-90% of the surface area thereof, wherein a height of said bottom plate material is <100% of a height of the heat exchanger adjacent to said heat exchanger or absent where said heat exchanger is provided, preferably isolating bottom plate material, in particular
wherein the tray (1) comprises supports (31) that provide draining, wherein the tray supports (31) provide draining towards the tray outlet (29), and wherein the positioners (33) provide draining towards the tray inlet (28).

13. Heat exchange system according to any of claims 1-12, wherein the double channel (2) is at least partly provided in a casing (36).

14. Heat exchange system according to any of claims 1-13, wherein the double channel (2) comprises at least one coupler (37), preferably a coupler with a thread.

15. Kit of parts for a heat exchange system according to any of claims 1-14, comprising a tray comprising a heat exchanger (18) **characterized in that** the heat exchanger (18) comprises a meandering fluid flow path with straight segments for exchanging heat from warm shower water to cold inflow water, the heat exchanger comprising an inlet (24) and an outlet (25), wherein the straight segments of the heat exchanger are substantially in a direction perpendicular to warm shower water provided through the tray, and at least one further element selected from a shower faucet, a coupler, a shower wall fitting, a diverter and a fitting.

## Patentansprüche

1. Wärmeaustauschsystem für eine Dusche, umfassend
eine Wanne (1), die einen Wärmetauscher (18) mit einen Einlass (24) und einen Auslass (25) umfasst,
einem Doppelkanal (2) für die Flüssigkeitsströmung, wobei ein erster Kanal angepasst ist, um in Flüssigkeitsverbindung mit einem Kaltwasserauslass und dem Wärmetauschereinlass (24) zu stehen, und ein zweiter Kanal angepasst ist, um in Flüssigkeitsverbindung mit dem Wärmetauscherauslass (25) und einem Duschhahn zu stehen, und
einem Flüssigkeitsumleiter (3), wobei der Umleiter einen ersten Flüssigkeitsströmungspfad (6) zum Empfangen von kaltem Wasser von dem Kaltwasserauslass und zum Übertragen von kaltem Wasser zu dem Wärmetauschereinlass (24) und einen zweiten Flüssigkeitsströmungspfad (7) zum Empfangen von warmem Wasser von dem Wärmetauscherauslass (25) umfasst, und zum Weiterleiten des warmen Wassers zum Duschhahn und eine Befestigung (10) zur Befestigung an einem Kaltwasserauslass,
**gekennzeichnet durch** der Wärmetauscher (18) der einen mäanderförmigen Flüssigkeitsströmungspfad mit geraden Rohrsegmenten zum Austausch von Wärme von warmem Duschwasser zu kaltem Zuflusswasser umfasst, wobei die geraden Rohrsegmente des Wärmetauschersim Wesentlichen in einer Richtung senkrecht zu warmem Duschwasser verläuft, das **durch** die Wanne bereitgestellt wird, wobei ein Warmwasserflüssigkeitsströmungspfad (21) vorzugsweise in einem 0,01-4 cm dicken horizontalen Kanal bereitgestellt ist, vorzugsweise einem horizontalen Kanal mit variabler Dicke.

2. Wärmeaustauschsystem nach Anspruch 1, umfassend einen Duschhahn, insbesondere wobei der Flüssigkeitsumleiter in den Duschhahn (13) integriert ist.

3. Wärmeaustauschsystem nach einem der Ansprüche 1 bis 2, wobei der Flüssigkeitsumleiter (3) einen ersten Flüssigkeitsströmungspfadeinlass (8) umfasst, der mit einem zweiten Flüssigkeitsströmungspfadauslass (9) in Linie liegt.

4. Wärmeaustauschsystem nach einem der Ansprüche 1 bis 2, wobei der erste Flüssigkeitsströmungspfad (6) des Umleiters zu einer ersten Seite des Umleiters gerichtet ist und wobei der zweite Flüssigkeitsströmungspfad (7) des Umleiters zu einer zweiten Seite des Umleiters gerichtet ist.

5. Wärmeaustauschsystem nach einem der Ansprüche 1 bis 3, wobei der Fixator (10) des Umleiters ein Schraubelement ist.
Beschlag, und wobei der Fixateur um 360 Grad drehbar ist.

6. Wärmeaustauschsystem nach einem der Ansprüche 1 bis 4, wobei der erste und der zweite Flüssigkeitsströmungspfad (6, 7) nebeneinander angeordnet sind und wobei der erste Flüssigkeitsströmungspfad einen Einlass (8), einen seitlichen Kanal in Flüssigkeitsverbindung mit dem Einlass und einen vertikalen Auslass (11) in Flüssigkeitsverbindung mit dem seitlichen Kanal umfasst und wobei der zweite Flüssigkeitsströmungspfad einen vertikalen Einlass (12), einen seitlichen Kanal in Flüssigkeitsverbindung mit dem Einlass und einen Auslass (9) in Flüssigkeitsverbindung mit dem seitlichen Kanal umfasst, wobei die seitlichen Kanäle vorzugsweise in einem Winkel a, beispielsweise von 30 bis 89 Grad, in Bezug auf den Einlass/Auslass (8, 9) angeordnet sind, insbesondere wobei der Einlass des ersten Fluidströmungswegs zumindest teilweise zwischen dem vertikalen Einlass und dem vertikalen Auslass platziert ist.

7. Wärmeaustauschsystem nach einem der Ansprüche 1 bis 6,
wobei die Schale (1) einen Einlass (28) zum Aufnehmen von warmem Duschwasser und einen Auslass (29) zum Ablassen des Duschwassers umfasst.

8. Wärmeaustauschsystem nach einem der Ansprüche 1 bis 7, wobei der Einlass (24) und der Auslass (25) des Wärmetauschers (18) diagonal angeordnet sind.

9. Wärmeaustauschsystem nach einem der Ansprüche 1 bis 8, wobei die Schale (1) eine obere Platte (19), einen Wärmetauscher (18) und eine untere Platte (17) umfasst, vorzugsweise eine abnehmbare obere Platte, untere Platte und einen abnehmbaren Wärmetauscher, wobei der Wärmetauscher vorzugsweise über 5 bis 50 % einer Oberfläche der unteren Platte vorgesehen ist.

10. Wärmeaustauschsystem nach einem der Ansprüche 1 bis 9, wobei die Wanne (1) eine Rinne (20) zur Aufnahme des Doppelkanals (2) aufweist, wobei sich mindestens ein Rinneneingang (27) in einer Ecke der Wanne befindet, wo kein Einlass (24) oder Auslass (25) für den Wärmetauscher vorgesehen ist.

11. Wärmeaustauschsystem nach einem der Ansprüche 1 bis 10, wobei die Schale (1) Stützen (31) aufweist, die für die Entwässerung sorgen.

12. Wärmeaustauschsystem nach einem der Ansprüche 1 bis 11, wobei die Schale (1) Befestigungselemente (23) zum Befestigen des Wärmetauschers (18) an der Bodenplatte (17) aufweist, wobei die Schale vorzugsweise Positionierer (33) umfasst, um den Wärmetauscher nach unten zu drücken, und wobei die Bodenplatte zwischen den Wärmetauschern Bodenplattenmaterial (22) auf über 50-90 % ihrer Oberfläche umfasst, wobei eine Höhe des Bodenplattenmaterials < 100 % einer Höhe des Wärmetauschers neben dem Wärmetauscher beträgt oder fehlt, wo der Wärmetauscher vorgesehen ist, vorzugsweise isolierendes Bodenplattenmaterial, insbesondere
wobei die Bodenstützen (31) für eine Entleerung in Richtung des Bodenauslasses (29) sorgen und wobei die Positionierer (33) für eine Entleerung in Richtung des Bodeneinlasses (28) sorgen.

13. Wärmeaustauschsystem nach einem der Ansprüche 1 bis 12, wobei der Doppelkanal (2) zumindest teilweise in einem Gehäuse (36) vorgesehen ist.

14. Wärmeaustauschsystem nach einem der Ansprüche 1 bis 13, wobei der Doppelkanal (2) mindestens eine Kupplung (37) aufweist, vorzugsweise eine Kupplung mit Gewinde.

15. Teilesatz für ein Wärmeaustauschsystem nach einem der Ansprüche 1 bis 14, umfassend eine Wanne mit einem Wärmetauscher (18), **gekennzeichnet durch** einen mäanderförmigen Flüssigkeitsströmungspfad mit geraden Rohrsegmenten zum Austausch von Wärme von warmem Duschwasser zu kaltem Zuflusswasser zum Austauschen von Wärme von warmem Duschwasser zu kaltem Zuflusswasser, wobei der Wärmetauscher einen Einlass (24) und einen Auslass (25) umfasst, wobei die geraden Rohrsegmente des Wärmetauschers im Wesentlichen in einer Richtung senkrecht zu dem **durch** die Wanne bereitgestellten warmen Duschwasser verläuft, und mindestens ein weiteres Element, einen Duschhahn, eine Kupplung, eine Duschwandarmatur, einen Umsteller und eine Armatur.

## Revendications

1. Système d'échange de chaleur pour une douche comprenant :
un plateau (1) comprenant un échangeur de chaleur (18), une entrée (24) et une sortie (25),
un double canal (2) pour l'écoulement de fluide, un premier canal étant adapté pour être en connexion fluidique avec une sortie d'eau froide et l'entrée d'échangeur de chaleur (24) et un second canal étant adapté pour être en connexion fluidique avec la sortie d'échangeur de chaleur (25) et un robinet de douche, et
un dérivateur de fluide (3), le dérivateur comprenant un premier trajet d'écoulement de fluide (6) pour recevoir de l'eau froide de la sortie d'eau froide et transférer de l'eau froide vers l'entrée d'échangeur de chaleur (24) et un second trajet d'écoulement de fluide (7) pour recevoir de l'eau chaude de la sortie d'échangeur de chaleur (25) et transférer ladite eau chaude au robinet de douche, et un fixateur (10) pour la fixation à une sortie d'eau froide,
caractérisée dans lequel l'échanger de la chaleur (18) comprenant un chemin d'écoulement de fluide sinueux avec des segments de tube droit pour échanger la chaleur de l'eau de douche chaude vers l'eau d'entrée froide, dans lequel les segments de tube droit de l'échangeur étant sensiblement dans une direction perpendiculaire à l'eau de douche chaude fournie à travers le plateau, un trajet d'écoulement de fluide d'eau chaude (21) étant de préférence prévu dans un conduit horizontal d'épaisseur 0,01-4 cm, de préférence un conduit horizontal d'épaisseur variable.

2. Système d'échange de chaleur selon la revendication 1, comprenant un robinet de douche, en particulier
dans lequel le déviateur de fluide est intégré dans le robinet de douche (13).

3. Système d'échange de chaleur selon l'une quelconque des revendications 1 à 2, dans lequel le déflecteur de fluide (3) comprend une première entrée de trajet d'écoulement de fluide (8) qui est alignée avec une seconde sortie de trajet d'écoulement de fluide (9).

4. Système d'échange de chaleur selon l'une quelconque des revendications 1 à 3, dans lequel le premier trajet d'écoulement de fluide (6) du déviateur est dirigé vers un premier côté du déviateur et dans lequel le second trajet d'écoulement de fluide (7) du déviateur est dirigé vers un second côté du déviateur.

5. Système d'échange de chaleur selon l'une quelconque des revendications 1 à 4, dans lequel le fixateur (10) du déviateur est du type à vis montage, et dans lequel le fixateur est rotatif sur 360 degrés.

6. Système d'échange de chaleur selon l'une quelconque des revendications 1 à 5, dans lequel les premier et deuxième trajets d'écoulement de fluide (6, 7) sont adjacents l'un à l'autre, et dans lequel le premier trajet d'écoulement de fluide comprend une entrée (8), un canal latéral en connexion fluidique avec l'entrée, et une sortie verticale (11) en connexion fluidique avec le canal latéral, et dans lequel le deuxième trajet d'écoulement de fluide comprend une entrée verticale (12), un canal latéral en connexion fluidique avec l'entrée, et une sortie (9) en connexion fluidique avec le canal latéral, de préférence dans lequel les canaux latéraux sont situés sous un angle a, tel que de 30 à 89 degrés, par rapport à l'entrée/sortie (8, 9), en particulier dans lequel ladite première entrée de trajet d'écoulement de fluide est au moins en partie placée entre ladite entrée verticale et ladite sortie verticale.

7. Système d'échange de chaleur selon l'une quelconque des revendications 1 à 6, dans lequel le plateau (1) comprend une entrée (28) pour recevoir l'eau de douche chaude, et une sortie (29) pour évacuer l'eau de douche.

8. Système d'échange de chaleur selon l'une quelconque des revendications 1 à 7, dans lequel l'entrée (24) et la sortie (25) de l'échangeur de chaleur (18) sont placées en diagonale.

9. Système d'échange de chaleur selon l'une quelconque des revendications 1 à 8, dans lequel le plateau (1) comprend une plaque supérieure (19), un échangeur de chaleur (18) et une plaque inférieure (17), de préférence une plaque supérieure, une plaque inférieure et un échangeur de chaleur démontables, l'échangeur de chaleur étant de préférence disposé sur 5 à 50 % d'une surface de la plaque inférieure.

10. Système d'échange de chaleur selon l'une quelconque des revendications 1 à 9, dans lequel le plateau (1) comprend une gouttière (20) destinée à recevoir le double canal (2), où au moins une entrée de gouttière (27) est située dans un coin du plateau où aucune entrée (24) ou sortie (25) pour l'échangeur de chaleur n'est prévue.

11. Système d'échange de chaleur selon l'une quelconque des revendications 1 à 10, dans lequel le plateau (1) comprend des supports (31) qui assurent le drainage.

12. Système d'échange de chaleur selon l'une quelconque des revendications 1 à 11, dans lequel le plateau (1) comprend des éléments de fixation (23) pour fixer l'échangeur de chaleur (18) à la plaque inférieure (17), dans lequel le
Le plateau comprend de préférence des positionneurs (33) pour forcer l'échangeur de chaleur vers le bas, et dans lequel la plaque inférieure comprend un matériau de plaque inférieure (22) entre l'échangeur de chaleur sur 50 à 90 % de la surface de celui-ci, dans lequel une hauteur dudit matériau de plaque inférieure est < 100 % d'une hauteur de l'échangeur de chaleur adjacent audit échangeur de chaleur ou absent lorsque ledit échangeur de chaleur est fourni, de préférence un matériau de plaque inférieure isolant, en particulier dans lequel les supports de plateau (31) assurent le drainage vers la sortie de plateau (29), et dans lequel les positionneurs (33) assurent le drainage vers l'entrée de plateau (28).

13. Système d'échange de chaleur selon l'une quelconque des revendications 1 à 12, dans lequel le double canal (2) est au moins partiellement prévu dans un boîtier (36).

14. Système d'échange de chaleur selon l'une quelconque des revendications 1 à 13, dans lequel le double canal (2) comprend au moins un coupleur (37), de préférence un coupleur avec un filetage.

15. Ensemble de pièces pour un système d'échange de chaleur selon l'une quelconque des revendications 1 à 14, comprenant un plateau comprenant un échangeur de chaleur (18) Caractérisée dans lequel l'échangeur de chaleur comprenant un chemin d'écoulement de fluide sinueux avec des segments de tube droit pour échanger la chaleur de l'eau de douche chaude vers l'eau d'entrée froide, l'échangeur de chaleur comprenant une entrée (24) et une sortie (25), dans lequel les segments de tube droit de l'échangeur de chaleur étant sensiblement dans une direction perpendiculaire à l'eau de douche chaude fournie à travers le plateau, et au moins un autre élément choisi un robinet de douche, un coupleur, un raccord de paroi de douche, un déviateur et un raccord.
